(19) **Europäisches Patentamt**

**European Patent Office**

**Office européen des brevets**

(11) **EP 1 303 970 B1**

(12) **EUROPEAN PATENT SPECIFICATION**

(45) Date of publication and mention
of the grant of the patent:
**21.09.2005 Bulletin 2005/38**

(21) Application number: **01965510.9**

(22) Date of filing: **24.07.2001**

(51) Int Cl.7: **H04L 29/06**, H04L 12/56

(86) International application number:
**PCT/IB2001/001664**

(87) International publication number:
**WO 2002/009389 (31.01.2002 Gazette 2002/05)**

(54) **TCP FLOW CONTROL**

TCP-FLUSSSTEURUNG

CONTROLE DE FLUX

(84) Designated Contracting States:
**AT BE CH CY DE DK ES FI FR GB GR IE IT LI LU
MC NL PT SE TR**

(30) Priority: **24.07.2000 GB 0018119**

(43) Date of publication of application:
**23.04.2003 Bulletin 2003/17**

(73) Proprietor: **Nokia Corporation
02150 Espoo (FI)**

(72) Inventors:
• **RUUTU, Jussi
FIN-02210 Espoo (FI)**

• **MA, Jian
Beijing (CN)**

(74) Representative: **Slingsby, Philip Roy et al
Page White & Farrer
54 Doughty Street
London WC1N 2LS (GB)**

(56) References cited:
**WO-A-00/21231**

• **GHANI N: "TCP ACK Pacing in ATM networks"
COMPUTER COMMUNICATIONS,NL,ELSEVIER
SCIENCE PUBLISHERS BV, AMSTERDAM, vol.
23, no. 9, April 2000 (2000-04), pages 835-847,
XP004195540 ISSN: 0140-3664**

**Description**

This invention relates to controlling the flow of data, especially in networks that are required to operated at high speed.

Many networks use the transmission control protocol (TCP) as their transport layer protocol. The transmission control protocol is the primary transport protocol in the commonly used TCP/IP protocol suite. The internet protocol (IP) does not provide a reliable bit stream: errors during the course of transmission are not corrected by the IP. Overlaying TCP on an IP link implements a reliable byte stream over the unreliable datagram service provided by IP. As part of implementing the reliable service, TCP is also responsible for flow and congestion control: ensuring that the data is transmitted at a rate consistent with the capacities of both the receiver and the intermediate links in the network path. As a result, most throughput problems in a TCP/IP system are rooted in TCP.

TCP is one of the few transport protocols that has congestion control mechanisms (see W. Richard Stevens, "TCP/IP Illustrated Volume 1, The protocols", and IETF RFC 793, "Transport Control Protocol", September 1981). A key element of the TCP congestion mechanism is its slow start probe algorithm. When a TCP connection starts up, the TCP specification requires the connection to be conservative and assume that the bandwidth available for the receiver is small. TCP is supposed to use an algorithm called slow start, to probe the path to learn how much bandwidth is available before the rate of data flow is increased. Slow start is used so that when a new TCP connection is started the TCP flow will continue after some idle period or when an acknowledgement (ACK) has failed to return after a set period (indicating a lost packet). In addition, the size of the transmission window is decreased. Each TCP acknowledgement specifies a corresponding packet so that the system can identify which packet has been lost.

A TCP link is established between two units, one of which is the source of a data message to be transmitted and the other of which is to receive the data message.

The two units are connected by a data path over which the data is to travel. The source unit generates datagrams (e.g. packets) that together represent the message that is to be sent. The datagrams are transmitted over the data path. The datagrams are finally reassembled by the receiving unit, which also requests retransmission of any datagrams that it cannot decode correctly.

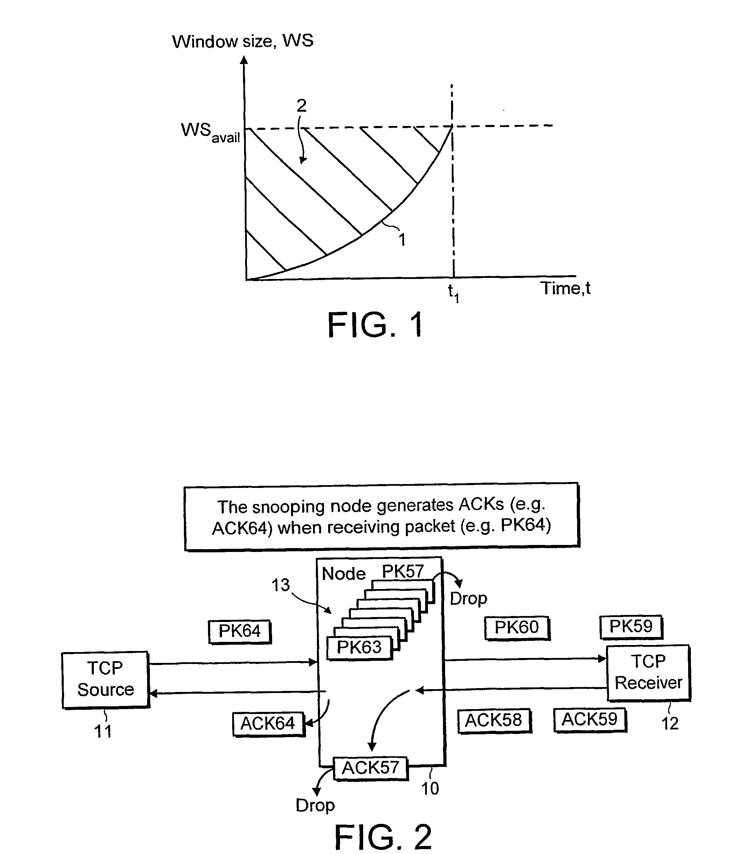

Whilst the slow start algorithm is running the TCP source starts with a notional transmission window set to one segment. In this state it will not transmit more than one datagram (e.g. packet) without having received an acknowledgement from the receiving unit. When an acknowledgement (ACK) is received, the window size is increased by one. In practice, the window size tends to increase exponentially, because one ACK increase the size to two, ACKs from these two segments increase the window to four, their ACKs increase size to eight etc. This is illustrated in figure 1. Line 1 in figure 1 illustrates the exponential increase of window size $WS$ up to a maximum $WS_{avail}$ at time $t_1$.

There are two problems with the slow start algorithm on high-speed networks. First, the probing algorithm is such that it can take a considerable time for the link to reach its maximum speed. The time ($t_1$ in figure 1) required to get up the maximum speed is a direct ratio of round trip time (RTT), delay-bandwidth product (DBW) and reverse ratio of average segment length (L). If the available bandwidth goes up or round-trip time increases, or both, this start-up time can be quite long. If the link is otherwise idle, during that period much of the link bandwidth will be unused and therefore potentially wasted. This is illustrated in figure 1. It can be assumed that from the start of the TCP connection, there is available bandwidth that corresponds to the available window size $WS_{avail}$. However, lower that bandwidth is not fully used until time $t_1$. Therefore, the shaded area 2 in figure 1 represents the wasted bandwidth.

A potentially more significant problem is that in many cases (especially when relatively short messages are to be sent) the entire data transfer will have been completed before the slow start algorithm has finished and the bandwidth-limited maximum window size $WS_{avail}$ has been reached. In this situation the user will never experience the full link bandwidth. All the transfer time will be spent in slow start. There are some common practical situations, when this can occur. For example, this problem is particularly severe for hyper-text transfer protocol (HTTP) connections (as used for transferring worldwide web data) because HTTP is notorious for starting a new TCP connection for every item on a web page.

In addition to the waste of bandwidth that is caused by the slow start algorithm, there is a weakness in the slow start algorithm itself in that it interprets packet loss as an indication of congestion. In fact packet loss may be due to other causes, such as transmission errors. There is no easy way open under the TCP to distinguish losses due to transmission errors from losses due to congestion, so the slow start algorithm has been designed on the conservative assumption that all losses are due to congestion. Thus, even if a packet loss occurs due to transmission error instead of congestion, the TCP source drops its transmission rate. After that rate drop, an unnecessarily long time can be taken to reach the full transmission rate. As a result, available bandwidth is yet again wasted.

These problems are exacerbated when TCP is run over links that have relatively high error rates or variable data capacity. For example, in some cases wireless links (such as those to cellular phones or satellites) have higher error rates than conventional cabled terrestrial links. Such higher error rates matter for two reasons. First, they cause errors in datagrams, which will have to be retransmitted. Second, TCP typically interprets loss as a sign of congestion and when loss is encountered it reverts to a modified version of the slow start algorithm.

Systems do exist that are able to make use of spare bandwidth on a link that is currently left over from over from other connections that are running over the link. One example is the available bit rate (ABR) service of the asynchronous transfer mode (ATM) system. With the ABR service a user is able to use bandwidth that is left over from constant bit rate (CBR) and other higher priority traffic. Another example is the generic packet radio system (GPRS), which utilises bandwidth of a global system for mobile communications (GSM) cellular telephone network that is not used for GSM voice connections. In the GSM system there are a number of GSM frequency slots, each of which is divided to eight time slots. Each time slot and frequency combination is able to support one GSM voice connection. The basic idea of GPRS is to use timeslots that are not currently in use for voice communications to carry data packets. Naturally, the number of available timeslots for GPRS varies over time, depending on the current demand for GSM voice connections.

A problem of dynamic systems of these types is that the bandwidth allocated for the service varies over time. For example, when TCP traffic is transmitted over GPRS, the bandwidth available for the TCP connections may increase or decrease suddenly (when several GSM calls are terminated or begun simultaneously). This means that a TCP connection over such a dynamic system may have to stop and start frequently, and in that environment TCP's slow start algorithm prevents the TCP connection from making full use of the available bandwidth. Thus, network resources are wasted and a user cannot get the full benefit of the dynamic available bandwidth. This problem is especially important with wireless communication systems, because radio interface capacity is limited and expensive.

If the TCP system had more information about the characteristics of the path over which the data is being sent then it may be able to accelerate the slow start process, for example by skipping at least some of the slow start process and beginning transmission at a somewhat higher rate than is represented by one datagram, if that were known to be likely to be supported by the link. In order to speed up the slow start process, several schemes have been proposed.

One such technique is known as "TCP snooping". (See Z. Liu et al., "Evaluation of TCP Vegas: Emulation and Experiment", Proc. ACM SIGCOMM'95, Aug. 1995, pp.185-196; and H. Balakrishnan, et al., " Improving TCP/IP Performance over Wireless Networks", Proc. ACM SIGCOMM'95, Aug. 1995). This idea is illustrated in figure 2. The idea calls for a router or other node 10 to be present between the TCP source 11 and the TCP receiver 12. The node 10 sends back to the source 11 ACKs for TCP data that the source has sent, to give the source 11 the illusion of a short delay path. The node 10 then suppresses ACKs returning from the receiver 12, and takes responsibility for re-transmitting to the receiver 12 any segments lost downstream of the router (i.e. over the portion of the path between the node 10 and the receiver 12). Thus, such a TCP snooping node 10 gives the TCP source 11 the impression that the node 10 is the actual TCP receiver.

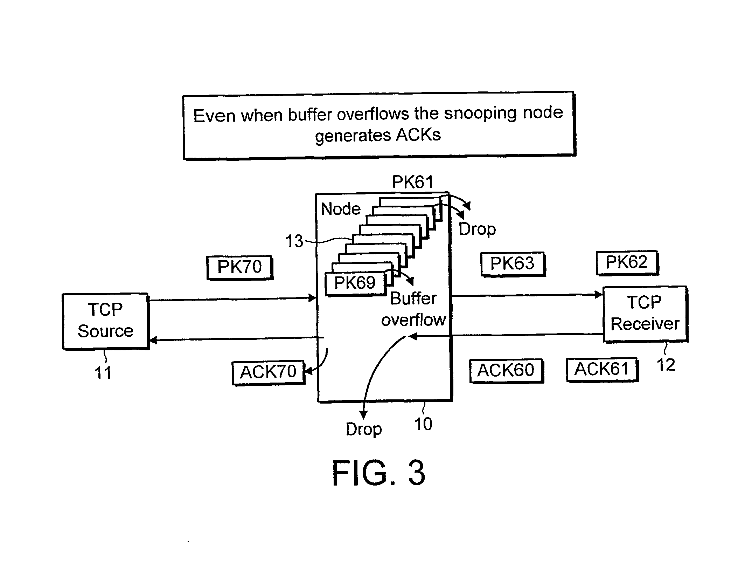

Figure 2 illustrates the flow of packets (PKn) and correspondingly numbered acknowledgements (ACKn). In the arrangement shown in figure 2, when a packet PK64 reaches the node 10 from the source 11 the node generates a corresponding acknowledgement ACK64 for the packet and returns that to the source. The node 10 stores at memory 13 packets that have been received by it but not yet acknowledged by the receiver 12. The node 10 sends packets in turn to the receiver (see packets PK59, PK60). The receiver returns acknowledgements for the packets it has received correctly (ACK58, ACK59). When the node 10 receives such an acknowledgement (e.g. ACK57 as illustrated in figure 2) it drops the corresponding packet from its store 13. The snooping node 10 must thus do a considerable amount of work after it sends an ACK to the source 11. It must buffer the data segment it has just received because the source 11 is now free to discard its copy as the segment has been acknowledged, and thus if the segment gets lost between the router and the receiver the router must be able to take full responsibility for re-transmitting it. Therefore, the data in the buffer cannot be deleted until the snooping node gets the relevant ACKs from the TCP receiver 12. Unfortunately, this method has the big problem that the buffer in a snooping node can fill quickly if the available bandwidth (such as cellular network resources) between the node and the TCP receiver (link 14 in figure 2) decreases. The problem has been illustrated in figure 3, which illustrates a packet PK69 overflowing the buffer 13 in the node 10.

It should be noted that the need for the node 10 to store segments, and thus the problem of buffer overflow, arises from the fact that the snooping node generates an acknowledgement that corresponds to the same TCP segment as it has just received.

Another approach to overcoming some of the problems of the TCP slow start algorithm is known as split TCP. In this approach a TCP connection is divided into multiple TCP connections, with a special TCP connection. Because each TCP connection is terminated, split TCP is not vulnerable to asymmetric paths. And in cases where applications actively participate in TCP connection management (such as web caching) it works well. But otherwise split TCP has the same problems as TCP snooping, especially the building up of buffers.

"TCP ACK pacing in ATM networks" by N Ghani discusses an acknowledgement pacing device in a transmission path. The device modulates the timing between TCP ACK packets to limit emissions during periods of congestion. An ACK packet is intercepted by the pacing device and delayed if the forward link is congested.

WO 00/21231 discloses a buffering network entity located in a transmission path. The buffering entity intercepts packets and transmits a status message to the transmitting entity. The buffering entity transmits the received packet to the receiving entity. On receipt of an acknowledgement from the receiving entity, confirming that the packet was correctly received, the buffering entity transmits a further status message to the transmitting entity indicating the successful transmission of the packet.

There is therefore a need for an improved method of operation in protocols such as TCP in order to at least partially overcome one or more of the problems described above.

According to one aspect of the present invention there is provided a data communication node for operation in a communication path between a transmitter of datagrams and a receiver of datagrams under a protocol wherein the transmission of datagrams by the transmitter is dependant on it receiving an acknowledgement message for a previously transmitted datagram, the node comprising: detection apparatus for detecting communications in the path; an acknowledgement generator capable of generating acknowledgement messages for datagrams and transmitting those messages to the transmitter; and flow interruption apparatus capable of interrupting communications in the path; the node being capable of operating in the second and at least one of the first and third of the following modes: a first mode in which it does not interrupt communications in the path; a second mode in which it transmits an acknowledgement message for a datagram succeeding the latest datagram detected at the node; and a third mode in which it delays the communication of acknowledgement messages to the transmitter.

In the first mode the node preferably does not affect communications in the path, suitably so that datagrams from the transmitter can flow freely past the node towards the receiver and acknowledgement messages from the receiver can flow freely towards the transmitter.

In the second and/or third mode the node preferably interrupts the communication of acknowledgement messages from the receiver to the transmitter. In the second and/or third mode the node preferably interrupts the communication of datagrams from the transmitter to transmitter to the receiver.

The node may comprise a memory capable of storing datagrams and/or acknowledgement messages. In the second and/or third mode the node preferably stores in the memory datagrams detected in transmission from the transmitter to the receiver. The node may then, in the second and/or third mode, if it detects no acknowledgement message for a datagram from the receiver within a set period retransmit that datagram to the receiver. On receiving an acknowledgement message for a datagram the node may delete that datagram from the memory.

The node preferably comprises a mode determination unit for determining the mode of operation of the node. The mode determination unit is preferably capable of determining whether there is available capacity in the communication path, for example unused bandwidth in the communication path (preferably in both directions over the path), and/or available capacity in the said memory of the node (if present). If there is such available capacity the mode determination unit is preferably capable of causing the node to operate in the second mode. The mode determination unit is preferably capable of determining whether there is congestion in the communication path. Congestion in the communication path may be indicated by delays in communication over the path (either of datagrams or acknowledgements), excessive loss of data, excessive demands on the path etc. The congestion may arise due to one or both of an increase in the amount of data directed over the path and a reduction in the data capacity (bandwidth) of the path. When the unit determines that there is congestion it is preferably capable of causing the node to operate in the third mode. Otherwise (i.e. if there is no available capacity or congestion in the communication path) the determination unit is suitably capable of causing the node to enter the first mode.

The node is preferably capable of operating in any of the first, second and third modes.

According to a second aspect of the present invention there is provided a method for data communication over a communication path between a transmitter of datagrams and a receiver of datagrams under a protocol wherein the transmission of datagrams by the transmitter is dependant on it receiving an acknowledgement message for a previously transmitted datagram, there being a node located in the communication path between the transmitter and the receiver; the method comprising: the transmitter transmitting datagrams towards the receiver; the node detecting the said datagrams; and the node repeatedly transmitting to the transmitter an acknowledgement message for a datagram succeeding the latest datagram detected at the node.

In both aspects of the invention the protocol is preferably a transmission control protocol (TCP). The protocol preferably provides an operation type in which the transmitter will not transmit a datagram until it has received an acknowledgement message for a datagram transmitted a stored interval previously, and most preferably in which the stored interval is increased if an acknowledgement message is received. This may be a slow start operation type.

The stored interval is preferably expressed as a number of data units, for example a number of datagrams or a number of bits. Preferably the interval is expressed as a number of datagrams. Then the protocol preferably provides an operation type in which a datagram will not be transmitted until an acknowledgement has been received for the datagram that was transmitted n datagrams perviously, where n is the number of datagrams expressed by the stored interval.

In both aspects of the invention at least part of the communication path is preferably provided by a radio link, most preferably a cellular radio link.

The present invention will now be described by way of example, with reference to the accompanying drawings, in which:

figure 1 illustrates the TCP slow start algorithm;
figures 2 and 3 illustrate aspects of the TCP snooping procedure;
figure 4 shows schematically the architecture of a communications system;
figure 5 illustrates preferred operating mode regimes;
figures 6 to 9 illustrate the operation of the system of figure 4 in the modes of figure 5; and
figure 10 illustrates a strategy for selecting an operating mode.

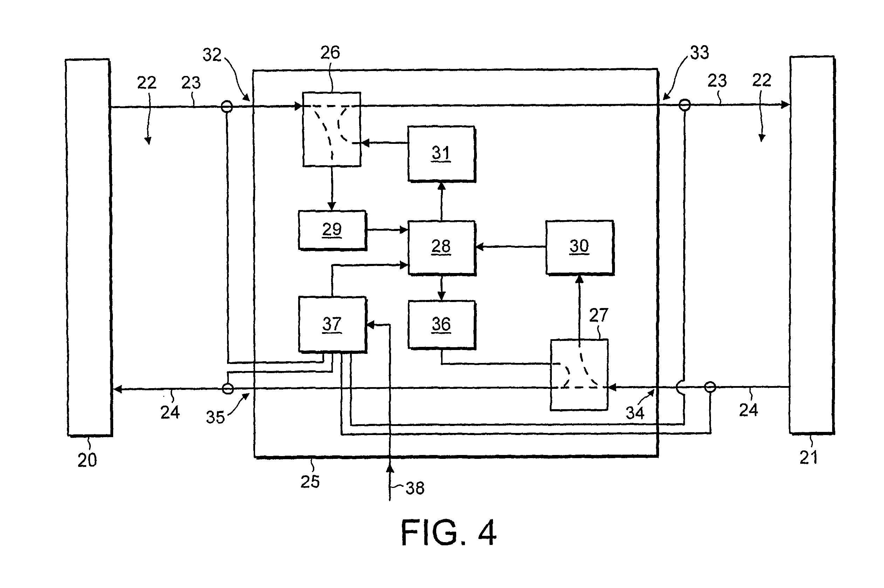

Figure 4 shows a schematic view of a communications system. The communications system comprises a sending unit 20 connected to a receiving unit 21 by a bi-directional communications path 22. The sending unit is capable of breaking a message into packets and sending it to the receiving unit using the TCP protocol. For ease of explanation the communications path 22 is shown as comprising outward channel 23 and return channel 24 operable to send signals in opposite directions, but in practice the path may be a single physical channel at any point along its length. The path may be provided by a chain of one or more links set in series, which could be of the same or different physical types (e.g. fixed wires, radio channels or optical channels).

Set in the communication path 22 is a node 25. The node 25 comprises switches 26, 27 set in the outward and return channels 23, 24 respectively. The switches operate under the control of a controller 28. Connected to one output of switch 26 is a packet detector 29. Connected to one output of switch 27 is an acknowledgement detector 30. The other outputs of the switches 26, 27 pass to the receiver 21 and sender 20 respectively. The outputs of the detectors 29, 30 pass to the controller 28. The node also includes a memory 31, in which data can be stored by the controller 28, and an acknowledgement generator 36 which can generate acknowledgement messages for packets under the direction of the controller 28. In one setting ("A") of the switch 26 incoming signals to the node on channel 23 (from input 32) are directed straight to the output 33 of the node 25 on channel 23. In the other setting ("B") of the switch 26 signals from input 32 are isolated from output 33; instead the output of the memory 31 is directed to the output 33. In one setting ("X") of the switch 27 incoming signals to the node on channel 24 (from input 34) are directed straight to the output 35 of the node 25 on channel 24. In the other setting ("Y") of the switch 27 signals from input 34 are isolated from output 35; instead the output of the acknowledgement generator 36 is directed to the output 35.

The controller 28 operates under the supervision of a mode selection unit 37 which monitors the channels 23 and 24 to determine the status of the communications system and is controllable by an external signal at 38. The mode selection unit 37 can also monitor the channels 23 and 24, especially when they include a wireless path or some other path that may be a bottleneck.

For clarity of description the node 25 is described herein as comprising distinct items of apparatus. However, the node 25 could be provided as one or more blocks of different functionality from those shown in figure 4. The functions of the node 25 could be provided wholly or partly by software operating on one or more microprocessors.

In operation the node 25 has three modes, referred to herein as a "normal" mode, a "fast" mode and an "early acknowledgement" mode.

- In the normal mode switch 26 is set to setting A and switch 27 is set to setting X. This allows signals from the sending unit 20 to pass straight through the node to the receiving unit 21, and signals from the receiving unit to pass straight through to the sending unit.
- In the fast mode switch 26 is set to setting A, switch 27 is set to setting Y. When the node receives a packet from the sending unit 20 the controller 28 relays it to the receiving unit. The receiving unit generates acknowledgements for the packets it receives. When a packet is acknowledged the node 25 relays the acknowledgement after a delay to the sending unit. Additionally, the node 25 may store the packet received from sending unit 21 and resend it to receiving unit 21 if no acknowledgement is received after a set period of time. In the early acknowledgement switches 26 and 27 are set to setting B and Y respectively. This process is described in more detail below.

In the normal mode the link 22 between the sending unit 20 and the receiving unit 21 operates end-to-end as if the node 25 were not present. In the early acknowledgement mode the node provides the ability to accelerate the increase in transmission rate by the sending unit under TCP slow start by sending prompt acknowledgements. In the fast mode the node can reduce the rate of transmission by the sender, in order to cope with reduced capacity over the link or filling of the nodes buffer memory. The availability of more than one of these modes provides the node with the ability to enhance operation of the TCP link in a wide range of circumstances, as will be described in more detail below. In particular, the range of modes permit a scheme of operation which can get around shortcomings of the TCP slow start algorithm and relieve buffer build up in the relaying node.

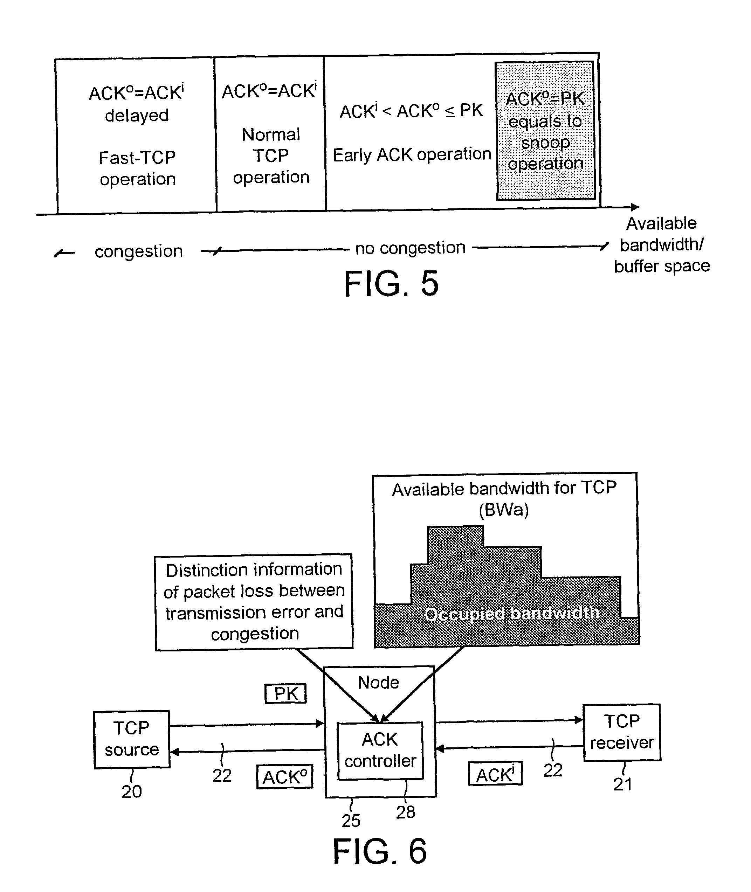

The mode selection unit 37 monitors the link 22 and causes the controller 28 to adopt one of the available modes in dependence on the link conditions. Figure 5 illustrates one preferred strategy. In normal operation the mode selection unit 37 selects the normal mode. When the buffer memory 31 has available space and there is available bandwidth on the link in both directions the mode selection unit selects early acknowledgement mode to drive the packet transmission rate to increase. When there is congestion on the link, or the buffer memory is full the mode selection unit selects fast mode to drive the packet transmission rate to decrease.

The effect of the available modes will now be described in more detail.

When there is available bandwidth above a set threshold, and the mode selector 37 detects no packet loss due to congestion, early acknowledgement mode is selected. When a packet is received by node 25 and detected by the detector 29 the controller 28 controls the acknowledgement generator 36 to generate an "early" acknowledgement, and releases it to the sender 20. The packet number specified in the early acknowledgement message is that of a packet that has not yet been received by the node 25 (but, for compatibility with most protocols, one that is likely to have been sent by the sender before the acknowledgement reaches it). Thus, whilst that actual data packet is on its way from acknowledgement controller to the TCP receiver and/or the acknowledgement generated by the TCP receiver is on its way from the receiver to the acknowledgement controller. The number by which the acknowledgement number is in advance of the last packet received by the node depends on the available bandwidth, nature of packet losses and available buffer space in the network node. Thus the acknowledgement controller predicts the need to send a true acknowledgement message for a certain packet and sends an anticipatory acknowledgement generated by itself to the TCP source so that the TCP source gets an acknowledgement earlier than it would even if a snooping node were used. The node 25 will then forward the packet, when received, to the receiver, or just allow the packet to pass through the node 25. When the corresponding acknowledgement message that is generated by the TCP receiver reaches the node the controller 28 discards it from the memory 31.

To illustrate the effectiveness of this mode, with the sequence number of the arriving packet at the node defined as $PK(i)$, the arriving acknowledgement as $ACK^i(i)$ and the generated acknowledgement as $ACK^o(i)$, respectively, the $ACK^o(i)$ can be adjusted as a function of available bandwidth $BW_a$ and available buffer space $BS_a$ and $ACK^o(i-1)$. It can be formulated as

$$ACK^O(i) = ACK^O(i\text{-}1) + f(BWa, BS_a) \tag{1}$$

$$ACK^i(i) \leq ACK^O(i) \leq PK(i)$$

For example, the function $f$ can be

$$f = \left(PK - ACK^o(i-1)\right)\left(a_1 \frac{BS_a}{BS_{\max}} + a_2 BW_a\right) \tag{2}$$

where $BS_{max}$ is the maximum buffer space and $a_1$ and $a_2$ are constants. Notice that if $f = PK\text{-}ACK^o(i\text{-}1)$ we have reduced the early acknowledgement method to conventional TCP snooping.

In early acknowledgement mode the TCP source is rapidly acknowledged that its packets has been received, and the source starts to increase its transmission rate. This in turn reduces the time taken for the TCP protocol to reach its full speed and improves overall throughput.

Since function $f$ (equation 2) takes into account the available bandwidth and the buffer occupancy, it overcomes problems of the TCP snooping method. Effectively, the transmitted $ACK^o$ approaches $ACK^i$ when the available buffer space and/or bandwidth decreases. When no unused bandwidth is available, $ACK^i = ACK^o$ and the normal operation of TCP has been reached. On the other hand, when the available bandwidth and/or buffer space increases, $ACK^o$ approaches $PK$. Thus, when there is lot of unused available bandwidth, the node 25 in early acknowledgement mode operates in a similar way to the TCP snooping method described above.

The normal mode is used once the TCP system at the sender has reached full speed and there is substantially no unused available bandwidth in the direction from the sender to the receiver. The arrival of a TCP packet at the node no longer triggers generation of early acknowledgement. Instead, the acknowledgement controller simply lets the TCP packets and corresponding acknowledgements flow through it in a natural, undisturbed way.

In the fast TCP mode, which is used if the mode selector senses packet loss due to congestion, the acknowledgement controller postpones the returning of acknowledgements to the sender. This could be done by the node receiving acknowledgements from the receiver, storing them for a period and then relaying them to the sender; or by the node introducing a delay before it generates an acknowledgement itself. The process of postponing acknowledgements could be conducted in a manner as described in WO 99/04536, the contents of which are incorporated herein by reference. The effect of the delaying of acknowledgements is to reduce congestion, and therefore packet loss.

Figure 6 illustrates early acknowledgement mode further. Based on the information it has sensed about the nature of packet loss and the available bandwidth the mode selector of the node 25 has selected early acknowledgement mode, and has caused the controller to operate in that mode. A TCP packet with the sequence number PK is coming from the source to the node. The acknowledgement controller receives the TCP packet. An acknowledgement $ACK^o$ is sent by the node to the TCP source. The acknowledgement could be generated wholly by the node or a suitable acknowledgement packet passing the node at that time (having been generated by the TCP receiver) could be captured and modified to carry the $ACK^o$. One method for the node to use in calculating the value of $ACK^0$ has been shown in equation 1 above.

The sending of $ACK^o$ and the like will cause the TCP source to speed up rapidly since it will now receive acknowledgements faster than with other methods. There is essentially a saving of more than the round trip time between the node and the TCP receiver. Effectively, the TCP source sees there to be a shorter distance to the receiver than even the distance to the node.

The TCP packet PK is forwarded to the TCP receiver. Notice that the generation and transmission (or capture and alteration) of $ACK^o$ and the forwarding (or allowing to pass) of PK can occur also in reverse order. A copy of TCP packet PK is stored in memory 31 so that it can be retransmitted by the node if the packet is lost between the ACK controller and the TCP receiver.

The TCP receiver receives the TCP packet PK and, as usual, acknowledges it by sending a corresponding $ACK^i$ towards the TCP source. Finally, the ACK controller intercepts $ACK^i$ and discards it or uses the ACK for some other $ACK^o$.

The ACK controller must also take care of retransmissions. Thus it monitors the flow of acknowledgements $ACK^i$ from the TCP receiver. If within some specified time no ACK has been forthcoming, it retransmits the TCP packet with sequence number PK. Notice that here it is possible to use the standard TCP retransmission mechanisms as specified in IETF RFC 793, "Transport Control Protocol", September 1981.

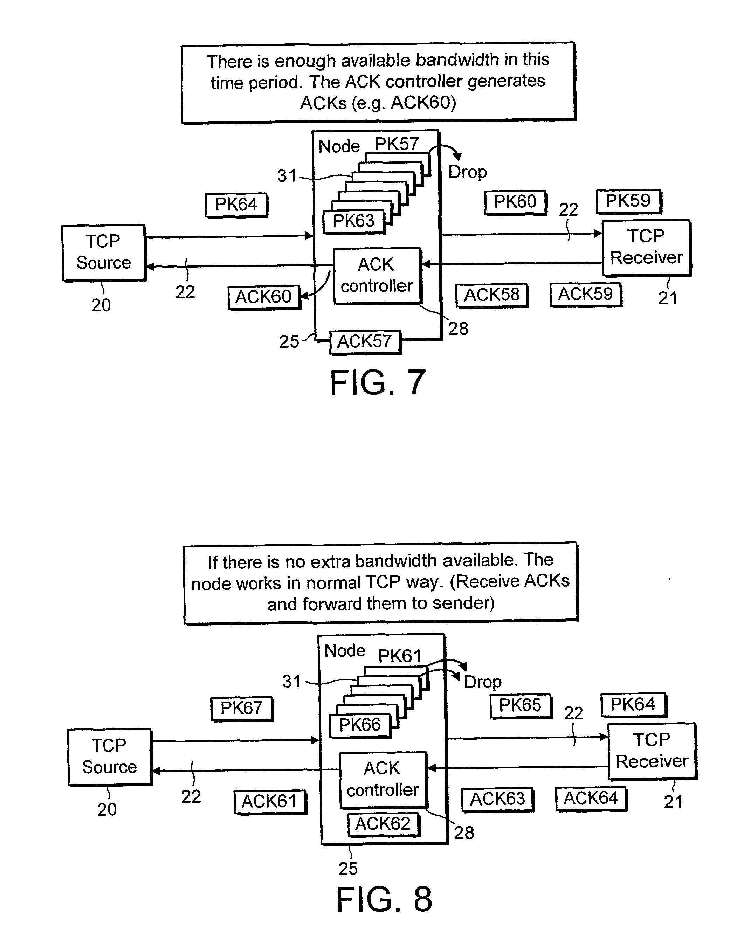

Figure 7 illustrates a more detailed example of transmission according to the present invention. Here it is assumed that there is enough bandwidth and buffer space available for transmission rates to increase further. Suppose that a packet with the sequence number 64 arrives at the node from the source whilst an acknowledgement message with number 57 arrives from the receiver. Based on the available bandwidth, the node has determined to use early acknowledgement mode. It creates an acknowledgement message with number 60 and transmits it to the TCP source. Notice that the number of this message is below 64 (the number of the arrived packet). The acknowledgement message with 57 received from the TCP receiver is discarded (or it could have been changed to bear the value 60). The packet 64 is stored in the buffer memory of the node in case it has to be retransmitted. Packet 57 is removed from the buffer since it has now been received.

At a later stage, illustrated by figure 8, there is no longer any unused bandwidth available. Therefore, acknowledgements coming from TCP receiver to the node are now let simply through, so that $ACK^o = ACK^i$. This corresponds to the normal TCP mode.

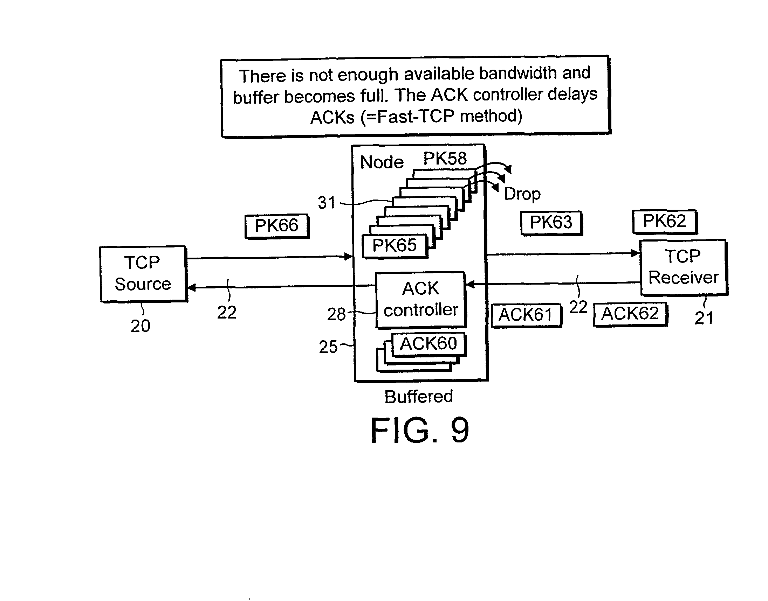

At some other stage, as illustrated by figure 9, congestion may occur. The buffer in the network node has become full and/or the unused bandwidth is small and/or errors due to congestion are detected. Then the node starts to delay acknowledgements ($ACK^i$s) flowing from the TCP receiver to the TCP source in order to reduce congestion.

The present invention is especially suitable for use in conjunction with radio networks, such as GPRS or third generation cellular networks (3GN), or other systems in which there may be a link that has a rapidly varying capacity for the TCP connection (due, for example, to changing levels of interference). In a radio system the node 25 could be sited near the radio interface in a communications link. The node could receive a signal indicative of the capacity currently available over the radio interface. For example, the node could be sited at the radio network controller (RNC) of a 3GN system. The node monitors the available capacity. When there is a lot of capacity free for TCP traffic coming from outside 3GN system, the node starts to generate early acknowledgements, even though the actual octets are still on their way over the radio interface. Thus, the TCP transmitter will get acknowledgements sooner, speed up it transmissions, and make better use of the capacity available. On the other hand, during congestion (for example due to poor radio conditions) the node can enter the fast TCP mode.

The early acknowledgement method can speed up the TCP slow start process and this way utilise more effectively the available bandwidth, as well as relieve buffer build up problems that can be experienced in prior TCP snooping systems. The method is performed by a node located between a TCP transmitter and a TCP receiver. The node generates and returns acknowledgements to the TCP transmitter for data packets that have not yet reached the node, and therefore have not been received and acknowledged by the TCP receiver. This can reduce the time that TCP transmitter has to wait for an acknowledgement, and thus allows the TCP transmitter to accelerate it transmissions faster than without this mechanism. The sequence of acknowledgements is adjusted according to available bandwidth and buffer space, measurement of sequence number of arrival packets and of arrival acknowledgements to the node.

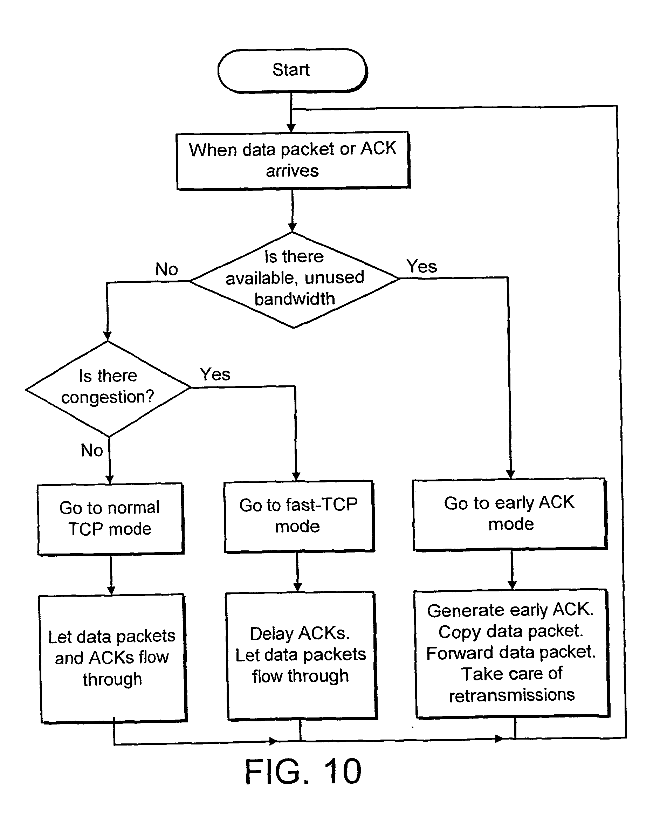

The early acknowledgement method can be embodied in a node that can operate in two or more (preferably at least three) modes, for example: the early acknowledgement mode, a normal TCP mode and a fast TCP mode. The decision on the mode to be used can, for example, be based on the available, unused bandwidth, on buffer occupancy levels, and on congestion. Figure 10 is a flow diagram that illustrates one example of a decision process on which mode to use.

The present invention is not limited to the examples described above.

The applicant draws attention to the fact that the present invention may include any feature or combination of features disclosed herein either implicitly or explicitly or any generalisation thereof.

**Claims**

1. A data communication node (25) for operation in a communication path (22) between a transmitter of datagrams (20) and a receiver of datagrams (21) under a protocol wherein the transmission of datagrams by the transmitter is dependant on it receiving an acknowledgement message for a previously transmitted datagram, the node comprising:

   detection apparatus (29) for detecting communications in the path;
   an acknowledgement generator (36) adapted to generate acknowledgement messages for datagrams and transmit those messages to the transmitter; and
   flow interruption apparatus adapted to interrupt communications in the path;

   **characterised in that** the node is adapted to operate in the second and at least one of the first and third of the following modes:

   - a first mode in which it does not interrupt communications in the path;
   - a second mode in which it transmits an acknowledgement message for a datagram succeeding the latest datagram detected at the node; and
   - a third mode in which it delays the communication of acknowledgement messages to the transmitter.

2. A data communication node as claimed in claim 1, wherein in the second and/or third modes the node interrupts the communication of acknowledgement messages from the receiver to the transmitter.

3. A data communication node as claimed in claim 1 or 2, comprising a memory; and wherein in the second and/or third mode the node stores in the memory datagrams detected in transmission from the transmitter to the receiver.

4. A data communication node as claimed in claim 3, wherein in the second and/or third mode the node interrupts the communication of datagrams from the transmitter to the receiver.

5. A data communication node as claimed in claim 3 or 4, wherein in the second and/or third mode if the node detects no acknowledgement message for a datagram from the receiver within a set period it retransmits that datagram to the receiver.

6. A data communication node as claimed in any of claims 3 to 5, wherein in the second and/or third mode on receiving an acknowledgement message for a datagram the node deletes that datagram from the memory.

7. A data communication node as claimed in any preceding claim, comprising a mode determination unit (37) for determining the mode of operation of the node.

8. A data communication node as claimed in claim 7, wherein the mode determination unit is capable of determining whether there is available capacity in the communication path and if there is available capacity causing the node to operate in the second mode.

9. A data communication node as claimed in claim 7 or 8, wherein the mode determination unit is capable of determining whether there is congestion in the communication path and if there is congestion causing the node to operate in the third mode.

**10.** A data communication node as claimed in claim 9 as dependant on claim 8, wherein if there is no available capacity or congestion in the communication path the determination unit is capable of causing the node to enter the first mode.

**11.** A data communication node as claimed in any preceding claim, wherein the node is capable of operating in any of the first, second and third modes.

**12.** A data communication node as claimed in any preceding claim, wherein the protocol is a transmission control protocol (TCP).

**13.** A data communication node as claimed in any preceding claim, wherein the protocol provides an operation type in which the transmitter will not transmit a datagram until it has received an acknowledgement message for a datagram transmitted a stored interval previously.

**14.** A data communication node as claimed in claim 13, wherein in the said operation type the protocol provides that the stored interval is increased if an acknowledgement message is received.

**15.** A data communication node as daimed in claim 13 or 14, wherein the said operation type is a slow start operation type.

**16.** A data communication node as claimed in any preceding claim, wherein at least part of the communication path is a radio link.

**17.** A data communication node as claimed in claim 16, wherein the radio link is a cellular radio link.

**18.** A method for data communication over a communication path (22) between a transmitter of datagrams (20) and a receiver of datagrams (21) under a protocol wherein the transmission of datagrams by the transmitter is dependant on it receiving an acknowledgement message for a previously transmitted datagram, there being a node (25) located in the communication path between the transmitter and the receiver, **characterised in that** the method comprises:

> the transmitter transmitting datagrams towards the receiver;
> the node detecting the said datagrams; and
> the node repeatedly transmitting to the transmitter an acknowledgement message for a datagram succeeding the latest datagram detected at the node.

**19.** A method as claimed in claim 18, wherein the protocol is a transmission control protocol (TCP).

**20.** A method as claimed in claim 18 or 19, wherein the protocol provides an operation type in which the transmitter will not transmit a datagram until it has received an acknowledgement message for a datagram transmitted a stored interval previously.

**21.** A method as claimed in claim 20, wherein in the said operation type the protocol provides that the stored interval is increased if an acknowledgement message is received.

**22.** A method as claimed in claim 20 or 21, wherein the said operation type is a slow start operation type.

**23.** A method as claimed in any preceding claim, wherein at least part of the communication path is a radio link.

**24.** A method as claimed in claim 23, wherein the radio link is a cellular radio link.

**Patentansprüche**

**1.** Datenkommunikationsknoten (25) zum Betrieb in einem Kommunikationsweg (22) zwischen einem Datagrammübertrager (20) und einem Datagrammempfänger (21) gemäß einem Protokoll, wobei die Datagrammübertragung durch den Übertrager davon abhängig ist, dass er eine Bestätigungsnachricht für ein zuvor übertragenes Datagramm empfängt, wobei der Knoten umfasst:

eine Erfassungsvorrichtung (29) zur Erfassung von Kommunikationen in dem Weg,
einen Bestätigungserzeuger (36), der zur Erzeugung von Bestätigungsnachrichten für Datagramme und zur Übertragung dieser Nachrichten zu dem Übertrager angepasst ist, und
eine Flussunterbrechungsvorrichtung, die zur Unterbrechung von Kommunikationen in dem Weg angepasst ist,

**dadurch gekennzeichnet, dass** der Knoten zum Betrieb in dem zweiten und zumindest in einem der ersten und dritten der nachstehenden Modi angepasst ist:

- ein erster Modus, bei dem er die Kommunikationen in dem Weg nicht unterbricht,
- ein zweiter Modus, bei dem er eine Bestätigungsnachricht für ein Datagramm auf das letzte an dem Knoten erfasste Datagramm hin folgend überträgt, und
- ein dritter Modus, bei dem er die Mitteilung von Bestätigungsnachrichten zu dem Übertrager verzögert.

2. Datenkommunikationsknoten gemäß Anspruch 1, wobei in dem zweiten und/oder dritten Modus der Knoten die Mitteilung von Bestätigungsnachrichten von dem Empfänger zu dem Übertrager unterbricht.

3. Datenkommunikationsknoten gemäß Anspruch 1 oder 2, der einen Speicher umfasst, und wobei in dem zweiten und/oder dritten Modus der Knoten in dem Speicher Datagramme speichert, die in einer Übertragung von dem Übertrager zu dem Empfänger erfasst sind.

4. Datenkommunikationsknoten gemäß Anspruch 3, wobei in dem zweiten und/oder dritten Modus der Knoten die Mitteilung von Datagrammen von dem Übertrager zu dem Empfänger unterbricht.

5. Datenkommunikationsknoten gemäß Anspruch 3 oder 4, wobei der Knoten in dem zweiten und/oder dritten Modus, bei nicht erfasster Bestätigungsnachricht für ein Datagramm von dem Empfänger innerhalb einer eingestellten Zeitspanne, dieses Datagramm wieder zu dem Empfänger überträgt.

6. Datenkommunikationsknoten gemäß einem der Ansprüche 3 bis 5, wobei der Knoten in dem zweiten und/oder dritten Modus, bei Empfang einer Bestätigungsnachricht für ein Datagramm, dieses Datagramm aus dem Speicher löscht.

7. Datenkommunikationsknoten gemäß einem der vorstehenden Ansprüche, der eine Modusbestimmungseinrichtung (37) zur Bestimmung des Betriebsmodus des Knotens umfasst.

8. Datenkommunikationsknoten gemäß Anspruch 7, wobei die Modusbestimmungseinrichtung zur Bestimmung in der Lage ist, ob Kapazität in dem Kommunikationsweg verfügbar ist, und den Knoten bei Verfügbarkeit von Kapazität zum Betrieb in dem zweiten Modus veranlassen kann.

9. Datenkommunikationsknoten gemäß Anspruch 7 oder 8, wobei die Modusbestimmungseinrichtung zur Bestimmung in der Lage ist, ob es eine Blockierung in dem Kommunikationsweg gibt und den Knoten bei Vorhandensein einer Blockierung zum Betrieb in dem dritten Modus veranlassen kann.

10. Datenkommunikationsknoten gemäß Anspruch 9 in Abhängigkeit von Anspruch 8, wobei die Bestimmungseinrichtung bei Nichtverfügbarkeit von Kapazität oder Nichtvorhandensein einer Blockierung in dem Kommunikationsweg den Knoten zum Eintritt in den ersten Modus veranlassen kann.

11. Datenkommunikationsknoten gemäß einem der vorstehenden Ansprüche, wobei der Knoten zum Betrieb in jedem des ersten, zweiten oder dritten Modus in der Lage ist.

12. Datenkommunikationsknoten gemäß einem der vorstehenden Ansprüche, wobei das Protokoll ein TCP-Protokoll (TCP, "transmission control protocol") ist.

13. Datenkommunikationsknoten gemäß einem der vorstehenden Ansprüche, wobei das Protokoll eine Betriebsart bereitstellt, in der der Übertrager kein Datagramm überträgt, bis er eine Bestätigungsnachricht für ein um ein gespeichertes Intervall zuvor übertragenes Datagramm empfangen hat.

14. Datenkommunikationsknoten gemäß Anspruch 13, wobei in der Betriebsart das Protokoll eine Erhöhung des gespeicherten Intervalls bereitstellt, wenn eine Bestätigungsnachricht empfangen wird.

**15.** Datenkommunikationsknoten gemäß Anspruch 13 oder 14, wobei die Betriebsart eine slow-start-Betriebsart (Langsam-Start, "slow start") ist.

**16.** Datenkommunikationsknoten gemäß einem der vorstehenden Ansprüche, wobei zumindest ein Teil des Kommunikationswegs eine Funkverbindung darstellt.

**17.** Datenkommunikationsknoten gemäß Anspruch 16, wobei die Funkverbindung eine zellulare Funkverbindung ist.

**18.** Verfahren für Datenkommunikation über einen Kommunikationsweg (22) zwischen einem Datagrammübertrager (20) und einem Datagrammempfänger (21) gemäß einem Protokoll, wobei die Datagrammübertragung durch den Übertrager davon abhängig ist, dass er eine Bestätigungsnachricht für ein zuvor übertragenes Datagramm empfängt, wobei ein Knoten (25) in dem Kommunikationsweg zwischen dem Übertrager und dem Empfänger lokalisiert ist, **dadurch gekennzeichnet, dass** das Verfahren umfasst:

den die Datagramme zu dem Empfänger übertragenden Übertrager,
den die Datagramme erfassenden Knoten, und
den Knoten, der eine Bestätigungsnachricht für ein dem neuesten an dem Knoten erfassten Datagramm nochfolgendes Datagramm zu dem Übertrager wiederholt überträgt.

**19.** Verfahren gemäß Anspruch 18, wobei das Protokoll ein TCP-Protokoll ist.

**20.** Verfahren gemäß Anspruch 18 oder 19, wobei das Protokoll eine Betriebsart bereitstellt, in der der Übertrager kein Datagramm überträgt, bis er eine Bestätigungsnachricht für ein um ein gespeichertes Intervall zuvor übertragenes Datagramm empfangen hat.

**21.** Verfahren gemäß Anspruch 20, wobei in der Betriebsart das Protokoll eine Erhöhung des gespeicherten Intervalls bereitstellt, wenn eine Bestätigungsnachricht empfangen wird.

**22.** Verfahren gemäß Anspruch 20 oder 21, wobei die Betriebsart eine slow-start-Betriebsart ist.

**23.** Verfahren gemäß einem der vorstehenden Ansprüche, wobei zumindest ein Teil des Kommunikationswegs eine Funkverbindung darstellt.

**24.** Verfahren gemäß Anspruch 23, wobei die Funkverbindung eine zellulare Funkverbindung ist.

**Revendications**

**1.** Noeud de communication de données (25) pour le fonctionnement sur un trajet de communication (22) entre un émetteur de datagrammes (20) et un recepteur de datagrammes (21) sous un protocole dans lequel la transmission de datagrammes par l'émetteur dépend du fait qu'il a reçu un message d'accusé de réception pour un datagramme précédemment transmis, le noeud comprenant :

un dispositif de détection (29) adapté pour détecter des communications sur le trajet ;
un générateur d'accusés de réception (36) adapté pour générer des messages d'accusé de réception pour des datagrammes et transmettre ces messages vers l'émetteur ; et
un dispositif d'interruption de débit adapté pour interrompre les communications sur le trajet ;

**caractérisé en ce que** le noeud est adapté pour fonctionner dans le deuxième et dans au moins un des premier et troisième des modes suivants :

- un premier mode dans lequel il n'interrompt pas les communications sur le trajet ;
- un deuxième mode dans lequel il transmet un message d'accusé de réception pour un datagramme consécutif au dernier datagramme détecté au niveau du noeud ; et
- un troisième mode dans lequel il retarde la communication des messages d'accusé de réception vers l'émetteur.

2. Noeud de communication de données selon la revendication 1 dans lequel, dans le deuxième et/ou le troisième mode, le noeud interrompt la communication de messages d'accusé de réception depuis le récepteur vers l'émetteur.

3. Noeud de communication de données selon la revendication 1 ou 2, comprenant une mémoire ; et dans lequel, dans le deuxième et/ou le troisième mode, le noeud enregistre dans la mémoire les datagrammes détectés dans la transmission depuis l'émetteur vers le récepteur.

4. Noeud de communication de données selon la revendication 3 dans lequel, dans le deuxième et/ou le troisième mode, le noeud interrompt la communication de datagrammes depuis l'émetteur vers le récepteur.

5. Noeud de communication de données selon la revendication 3 ou 4 dans lequel, dans le deuxième et/ou le troisième mode, si le noeud ne détecte pas de message d'accusé de réception pour un datagramme en provenance du récepteur au cours d'une période de temps définie, il retransmet ce datagramme vers le récepteur.

6. Noeud de communication de données selon l'une quelconque des revendication 3 à 5 dans lequel, dans le deuxième et/ou le troisième mode, à réception d'un message d'accusé de réception pour un datagramme, le noeud supprime ce datagramme de la mémoire.

7. Noeud de communication de données selon l'une quelconque des revendications précédentes, comprenant une unité de détermination de mode (37) pour déterminer le mode de fonctionnement du noeud.

8. Noeud de communication de données selon la revendication 7, dans lequel l'unité de détermination de mode est apte à déterminer s'il existe, ou non, une capacité disponible sur le trajet de communication et s'il existe, ou non, une capacité disponible pour amener le noeud à fonctionner dans le deuxième mode.

9. Noeud de communication de données selon la revendication 7 ou 8, dans lequel l'unité de détermination de mode est apte à déterminer s'il existe, ou non, un encombrement sur le trajet de communication et, s'il existe un encombrement apte à amener le noeud à fonctionner dans le troisième mode.

10. Noeud de communication de données selon la revendication 9 qui dépend de la revendication 8, dans lequel, s'il n'existe pas de capacité disponible ou d'encombrement sur le trajet de communication, l'unité de détermination est apte à amener le noeud à entrer dans le premier mode.

11. Noeud de communication de données selon l'une quelconque des revendications précédentes, dans lequel le noeud est apte à fonctionner dans l'un quelconque des premier, deuxième et troisième modes.

12. Noeud de communication de données selon l'une quelconque des revendications précédentes, dans lequel le protocole est un protocole de contrôle de transmission (TCP).

13. Noeud de communication de données selon l'une quelconque des revendications précédentes, dans lequel le protocole procure un type de fonctionnement dans lequel l'émetteur ne transmettra pas un datagramme tant qu'il n'a pas reçu un message d'accusé de réception pour un datagramme transmis au cours d'un intervalle enregistré précédemment.

14. Noeud de communication de données selon la revendication 13 dans lequel, dans ledit type de fonctionnement, le protocole fait en sorte que l'intervalle enregistré soit augmenté si un message d'accusé de réception est reçu.

15. Noeud de communication de données selon la revendication 13 ou 14, dans lequel ledit type de fonctionnement est un type de fonctionnement à démarrage lent.

16. Noeud de communication de données selon l'une quelconque des revendications précédentes, dans lequel au moins une partie du trajet de communication est une liaison radio.

17. Noeud de communication de données selon la revendication 16, dans lequel la liaison radio est une liaison radio cellulaire.

18. Procédé de communication de données sur un trajet de communication (22) entre un émetteur de datagrammes (20) et un récepteur de datagrammes (21) sous un protocole dans lequel la transmission de datagrammes par l'émetteur dépend du fait qu'il a reçu un message d'accusé de réception pour un datagramme précédemment transmis, un noeud (25) étant situé sur le trajet de communication entre l'émetteur et le récepteur, le procédé étant **caractérisé en ce qu'**il comprend :

le fait que l'émetteur émet des datagrammes vers le récepteur ;
le fait que le noeud détecte lesdits datagrammes ; et
le fait que le noeud transmet de façon répétée, à destination de l'émetteur, un message d'accusé de réception pour un datagramme consécutif au dernier datagramme détecté au niveau du noeud.

19. Procédé selon la revendication 18, dans lequel le protocole est un protocole de contrôle de transmission (TCP).

20. Procédé selon la revendication 18 ou 19, dans lequel le protocole procure un type de fonctionnement dans lequel l'émetteur ne transmet pas un datagramme tant qu'il n'a pas reçu un message d'accusé de réception pour un datagramme transmis au cours d'un intervalle enregistré précédemment.

21. Procédé selon la revendication 20 dans lequel, dans ledit type de fonctionnement le protocole assure que l'intervalle enregistré est augmenté si un message d'accusé de réception est reçu.

22. Procédé selon la revendication 20 ou 21, dans lequel ledit type de fonctionnement est un type de fonctionnement à démarrage lent.

23. Procédé selon l'une quelconque des revendications précédentes, dans lequel au moins une partie du trajet de communication est une liaison radio.

24. Procédé selon la revendication 23, dans lequel la liaison radio est une liaison radio cellulaire.

Window size, WS

WS$_{avail}$

2

1

t$_1$

Time, t

FIG. 1

The snooping node generates ACKs (e.g. ACK64) when receiving packet (e.g. PK64)

Node PK57

13

Drop

PK64

PK63

PK60

PK59

TCP Source

11

ACK64

ACK58

ACK59

TCP Receiver

12

ACK57

10

Drop

FIG. 2

Even when buffer overflows the snooping node
generates ACKs

FIG. 3

FIG. 4

| ACK$^o$=ACK$^i$ delayed <br><br> Fast-TCP operation | ACK$^o$=ACK$^i$ <br><br> Normal TCP operation | ACK$^i$ < ACK$^o$ ≤ PK <br><br> Early ACK operation | ACK$^o$=PK equals to snoop operation |
|---|---|---|---|

Available bandwidth/ buffer space

── congestion ──/── no congestion ──────/

# FIG. 5

Available bandwidth for TCP (BWa)

Occupied bandwidth

Distinction information of packet loss between transmission error and congestion

Node

PK

TCP source

ACK controller

TCP receiver

22

ACK$^o$

ACK$^i$

22

20

25    28

21

# FIG. 6

There is enough available bandwidth in this time period. The ACK controller generates ACKs (e.g. ACK60)

Node PK57

31

Drop

PK64

PK63

PK60  22  PK59

TCP Source

ACK controller

TCP Receiver

22

ACK60

ACK58  ACK59

20

21

25  ACK57

28

## FIG. 7

If there is no extra bandwidth available. The node works in normal TCP way. (Receive ACKs and forward them to sender)

Node PK61

31

Drop

PK67

PK66

PK65  22  PK64

TCP Source

ACK controller

TCP Receiver

22  ACK61

ACK63  ACK64

20

21

ACK62

28

25

## FIG. 8

There is not enough available bandwidth and buffer becomes full. The ACK controller delays ACKs (=Fast-TCP method)

FIG. 9

Start

When data packet or ACK
arrives

Is there
available, unused
bandwidth

No          Yes

Is there
congestion?          Yes

No

Go to normal
TCP mode

Go to fast-TCP
mode

Go to early ACK
mode

Let data packets
and ACKs flow
through

Delay ACKs.
Let data packets
flow through

Generate early ACK.
Copy data packet.
Forward data packet.
Take care of
retransmissions

# FIG. 10